# EUROPEAN PATENT SPECIFICATION

(11) **EP 0 516 592 B1**
(45) Date of publication and mention of the grant of the patent: **11.01.1995**
(21) Application number: 92830216.5
(22) Date of filing: 08.05.1992
(51) Int. Cl.: B62J 1/26

(54) **Improved-comfort bycicle saddle**
Fahrradsattel mit verbessertem Komfort
Selle de bicyclette avec comfort amélioré

(30) Priority: 29.05.1991 IT MI910460 U
(43) Date of publication of application: 02.12.1992
(73) Proprietor: SELLE ITALIA S.r.l., I-36028 Rossano Veneto (Treviso) (IT)
(72) Inventor: Bigolin, Giuseppe, c/o Selle Italia S.r.l., IT-36028 Rossano Veneto (Vicenza) (IT)
(74) Representative: Cicogna, Franco

(56) References cited:
- DE-C- 453 653
- FR-A- 1 104 879
- FR-A- 2 306 866
- NL-A- 286 410
- US-A- 1 964 903

## Description

### BACKGROUND OF THE INVENTION

The present invention relates to an improved comfort bicycle saddle.

As is known, a very important problem to be solved in making saddles for bicycles and the like, is that of providing a padding or cushioning layer which perfectly fits both to the user body contour and to the weight of the user.

Conventional paddings for bicycle saddles, which usually comprise soft material layers, do not satisfactorily solve the above mentioned problem since, if the user has a comparatively great weight, then these prior paddings will be excessively compressed thereby greatly reducing the comfort of the saddle.

Different-density foamed materials have also been used for making the mentioned paddings; however also these materials have not been found completely satisfactory since they require a difficult layering of the padding elements.

The DE-C-453 653 discloses a bicycle saddle having substantially the features of the preamble of the main claim.

### SUMMARY OF THE INVENTION

Accordingly, the aim of the present invention is to overcome the above mentioned drawbacks by providing an improved comfort saddle for bicycles and the like, which comprises a padding which can automatically fit the user morphology, while providing a very efficient cushioning effect.

Within the scope of the above mentioned aim, a main object of the present invention is to provide such a padding element for bicycle saddles which has cushioning characteristics comparable to those of a pneumatic element without the drawback of the displacement of air masses which occurs in the case of a merely pneumatic cushion element.

Another object of the present invention is to provide such a bicycle saddle which is very reliable in operation and can be a easily made starting from easily commercially available elements and materials and which, moreover, is very competitive from a mere economic standpoint.

According to one aspect of the present invention, the above mentioned aim and objects, as well as yet other objects, which will become more apparent hereinafter, are achieved by an improved comfort saddle for bicycles having substantially the features of the characterizing portion of the main claim.

### BRIEF DESCRIPTION OF THE DRAWINGS

Further characteristics and advantages of the present invention Will become more apparent hereinafter from the following detailed disclosure of an improved comfort saddle for bycicles and the like, which is illustrated, by way of an indicative but not limitative example, in the figures of the accompanying drawings, where:

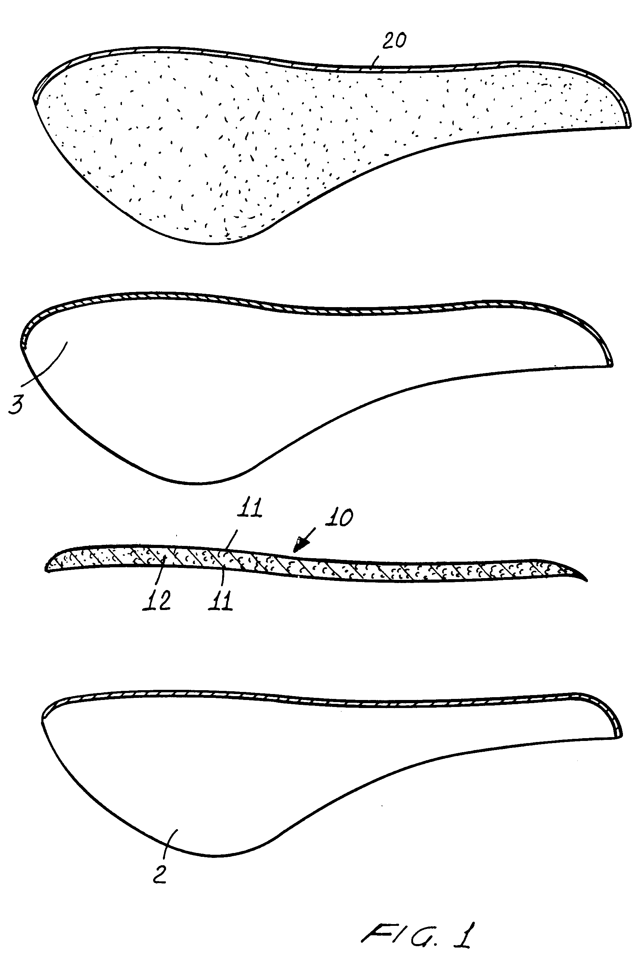

Figure 1 is a schematic longitudinal cross-sectional view illustrating, in an exploded condition, the saddle according to the present invention;
Figure 2 is a longitudinal cross-sectional view of the saddle according to the invention; and

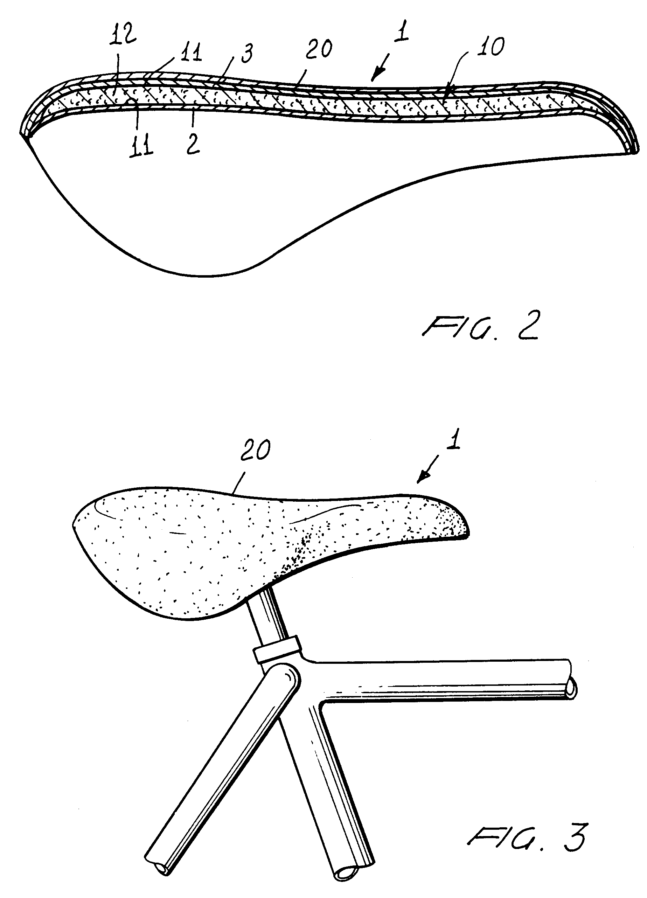

Figure 3 is a schematic view illustrating the subject saddle in its assembled condition.

### DESCRIPTION OF THE PREFERRED EMBODIMENT

With reference to the figures of the accompanying drawings, the improved comfort saddle for bycicles and the like, according to the present invention, which has been generally indicated at the renumber 1, comprises a supporting frame 2 having any suitable configuration, which is made of a substantially rigid material such as, for example, nylon or other plastic materials.

To the frame 2 there is applied, by conventional methods, an outer padding 3 which is advantageously made of a polyurethane material.

The main feature of the invention is that between the frame 2 and outer padding 3 there is interposed a cushion element, generally indicated at the reference number 10, which will operate as a cushioning padding proper.

More specifically, the cushion element 10 comprises two air-impermeable sheets 11, consisting of plastic material sheet elements, which are peripherally sealed to one another and hold therebetween a sponge material insert 12.

The thus constructed cushion element will actually operate as a pneumatic element, without, however, having the drawbacks related to the displacement of an air mass since the provision of the inside sponge like material allows to hold a comparatively great air volume which, depending on the pressure exerted by the user seating on the saddle, will be displaced in a gradual way, thereby providing an actually comfortable element for the sitting user.

The provision of the sponge like material, in particular, overcomes, as stated, the typical drawback of the displacement of air masses inside a pneumatic cushion while providing the cushioning effect actually pertaining to a pneumatic element.

In fact, the cushion element, being tightly closed with respect to the outside environment, will contain therein a comparatively great amount of air enclosed within the sponde-like material which, owing to its specific characteristics, will not allow the air contained therein, as a pressure is exerted thereon, to be instantaneously displaced, but, on the contrary, it will allow said air to be gradually displaced so as to allow the cushion element to inflate so as to perfectly fit to the morphology of the user.

Obviously the cushion element 10 can be made of any suitable material, even if the better results have been obtained by a foamed plastic material of the moltoprene type.

If desired a further coating element 20 can be applied to the saddle, which can be formed by a leather layer or a layer of any other suitable coating material.

From the above disclose it should be apparent that the invention fully achieves the intended aim and objects.

In particular, the fact is to be pointed out that the provision of a cushion element enclosing therein a comparatively great volume of air, which remains restrained inside a sponge-like plastic material,will provide the typical advantages of a pneumatic cushion without the drawback of a quick displacement of air masses, which displacement is hindered by said foamed plastic material.

While the invention has been disclosed and illustrated with reference to a preferred embodiment thereof, it should be apparent that the disclosed embodiment is susceptible to several modifications and variations all of which will come within the scope of the appended claims.

## Claims

1. An improved comfort saddle for bicycles comprising a substantially rigid frame (2) and an outer padding (3), wherein the saddle further comprises,between said frame and outer padding,a cushion element (10) constituted by air-impermeable material sheets (11) which are associated with one another at a peripheral portion thereof and hold therein a sponge material insert (12), characterized in that said sheets are peripherally sealed to one another thereby between said sheets there is tightly restrained in cooperation with said insert (12), a comparatively high volume of air, enclosed within said sponge-like material insert (12).

2. A saddle according to claim 1,characterized in that said sheets (11) comprise plastic material sheets.

3. A saddle according to claim 1,characterized in that said insert (12) is made of a foamed plastic material.

4. A saddle according to claim 3, characterized in that said foamed plastic material comprises moltoprene.

5. A saddle according to one or more of the preceding claims, characterized in that said saddle further comprises an outer coating (20) made of leather or other suitable materials, which is applied above the outer padding.

## Patentansprüche

1. Ein Sattel für Fahrräder mit verbessertem Komfort, umfassend einen im wesentlichen starren Rahmen (2) und eine äußere Polsterung (3), worin der Sattel weiterhin umfaßt, zwischen diesem Rahmen und der äußeren Polsterung, ein federndes Teil (10), gebildet von luftundurchlässigen Materiallagen (11), die an einem peripheren Teil davon miteinander verbunden sind und darin einen Einsatz aus Schwammaterial (12) beinhalten, dadurch gekennzeichnet, daß diese Lagen peripher aneinandergeschweißt sind, dabei zwischen diesen Lagen fest in Zusammenarbeit mit diesem Einsatz (12) ein vergleichsweise großes Volumen an Luft dicht festgehalten ist, eingeschlossen innerhalb dieses schwammähnlichen Materialeinsatzes (12).

2. Ein Sattel gemäß Anspruch 1, dadurch gekennzeichnet, daß diese Lagen (11) Lagen aus Kunststoffmaterial umfassen.

3. Ein Sattel gemäß Anspruch 1, dadurch gekennzeichnet, daß dieser Einsatz (12) aus einem geschäumten Kunststoffmaterial hergestellt ist.

4. Ein Sattel gemäß Anspruch 3, dadurch gekennzeichnet, daß dieses geschäumte Kunststoffmaterial Moltopren umfaßt.

5. Ein Sattel gemäß einem oder mehrerer der vorstehenden Ansprüche, dadurch gekennzeichnet, daß dieser Sattel weiterhin einen äußeren Überzug (20) umfaßt, hergestellt aus Leder oder anderen geeigneten Materialien, der auf die äußere Polsterung aufgelegt wird.

## Revendications

1. Une selle à confort amélioré pour bicyclettes comportant un châssis (2) substantiellement rigide et un rembourrage extérieur (3), où ladite selle comprend ultérieurement, entre ledit châssis et le rembourrage extérieur, un élément-coussin (10) constitué de feuilles (11) en matérieau imperméable à l'air qui sont jointes entre elles à leur parties périphériques, et qui tiennent dans leur intérieur un insert de matérieau alvéolaire (12), caractérisée en ce que lesdites feuilles sont soudées l'une à l'autre le long de leur périphérie, de manière qu'entre lesdites feuilles, en coopération avec ledit insert (12), un volume comparativement grand d'air est renfermé étanchement, inclus dans ledit insert (12) en matérieau alvéolaire.

2. Une selle selon la revendication 1, caractérisée en ce que lesdites feuilles (11) comprennent des feuilles en matérieau plastique.

3. Une selle selon la revendication 1, caractérisée en ce que ledit insert (12) est fait de matérieau plastique alvéolaire.

4. Une selle selon la revendication 3, caractérisée en ce que ledit matérieau plastique alvéolaire comprend du moltoprène.

5. Une selle selon l'une ou plusieurs des revendications précédentes, caractérisée en ce que ladite selle comprend ultérieurement un recouvrement extérieur (20) fait de cuir ou d'autres matérieaux appropriés, qui est appliqué au-dessus du rembourrage extérieur.
